# EUROPEAN PATENT APPLICATION

(11) **EP 1 973 070 A1**
(43) Date of publication of application: **24.09.2008**
(21) Application number: 07104510.8
(22) Date of filing: 20.03.2007
(51) Int. Cl.: G06Q 10/00

(54) **A method and system for automatic event monitoring and notification**

(71) Applicant: Zonith Holding APS, 1610 Kobenhavn V (DK)
(72) Inventor: Buch, Henrik, 3500, Vaerlose (DK); Stiesmark, Kristian Hartvig, 2500, Valby (DK); Werge, Klaus Bom, 2980, Kokkedal (DK)
(74) Representative: Holme Patent A/S

(57) **Abstract**

A method and system for automatic event monitoring and notification wherein a central unit monitors at least one remote unit via a permanent connection. If an event is detected at the remote unit, the central unit retrieves the event information from the remote unit and information on available recipients for the notification from a database. The available recipients are matched to the event information, producing a match level which indicates how competent a recipient is for responding to and handling the event. The match level is computed using at least one of the following, the recipients qualification level, experience level and/or stress level. The central unit compiles an array of at least one primary and his backup recipients and thereafter dispatches notifications to the at least one primary recipient. If the at least one primary recipient does not accept the event notification, notifications are sent to the backup recipients, where the last backup recipient is obliged to accept the event notification. This ensures that all events that occur at a remote unit are responded to and handled accordingly at all times.

## Description

The present invention relates to a method of automatic event monitoring and notification which operates on a central unit where the method comprises, in a first step, receiving an electronic event information from at least one automatic or manual remote unit, in a second step, maintaining permanent communication with the at least one remote unit, in a third step, classifying the received event based on the event information, generating an event classification, in a fourth step, providing a computer database of possible recipients, which stores at least up to date information about each recipients competence and their future and/or past work schedule, in a fifth step, compiling an array of recipients, from the computer database, in a sixth step, dispatching a notification of the event to at least one recipient, in a seventh step, awaiting a response from the at least one recipient, in an eight step, returning to the sixth step if the at least one recipient has rejected the notification or is non-responsive, and in a ninth step, responding to the event notification if the at least one recipient has accepted the notification.

A number of different businesses or organizations have branches, offices or commercial interests located at different geographical sites. An example of such an organization may be a bank which has a number of national or international branches. An alternative example may be an electricity producer which has a number of windmills positioned at different national locations. Organizations such as those previously mentioned usually require a constant monitoring of their resources, as any malfunction in their operation which goes unnoticed, may be damaging or even catastrophic for the organization.

Organizations that have constantly running resources that are vital to their operation and require constant monitoring, normally have a dedicated monitoring system and an affiliated response network. In general, monitoring systems and their affiliated response systems are based on alarm or event notifications which are evaluated by human intervention, often a dispatch operator. The response to the notification is selected by the operator based on the information available to the operator at that time. A drawback to a monitoring and a response system which is based on human involvement is that the time used for a response decision may, in extreme cases, be excessive and may therefore cause damage or increase the existing damage caused by the event or alarm to the organization.

Monitoring and/or response systems are usually of the kind which require permanent monitoring around the clock where it is not acceptable to have any time periods where the system is not capable of immediate response to an event or an alarm. Human operated systems using a single operator at all times, would have time periods where the system is not capable of immediate response, as humans require rest periods and bathroom breaks during their hours of duty. Therefore, for maintaining the capability of immediate response, a system would need two operators at all times, creating a redundancy if one operator requires a break. Such a system would be very expensive in daily operation, as the operator wages would be a significant part of the operation costs.

One method of effectively managing a monitoring and response system is by automating the decision process. US patent application 2006/0068752 A1 describes a method and apparatus for providing an automatic alarm notification by a dispatch call. The described system uses a local network server to monitor a plurality of alarm generating equipment, where the local server connects to a centralized server. The centralized server receives the alarm notifications from the local server and automatically dispatches notifications to preselected groups of recipients via any one of a number of communication protocols, e.g. voice calls, text messages or emails. The groups of recipients may be determined by having a database which selects the recipients by using attributes such as time of day, day of week, work schedule, vacation schedule and physical location of personnel.

A system, such as the one described in US 2006/0068752 A1, may have some limitations when the number of local network servers increases and/or the types of monitoring tasks are various. This would mean that the database would have to select a recipient from an increased number of attributes, which could increase the number of selection rules for the database. This increase in rules and attributes would complicate the selection process, as database selection rules are binary, i.e. 1 or 0, yes or no, on or off, etc., and the selection of suitable recipients could lead to a large number of candidates or very few.

The selection of the correct recipient for the specific task becomes very important when dealing with critical systems and the consequence of choosing a non-qualified person to respond to an event or alarm may be problematic and will in most cases increase the amount of time it takes to solve the problem.

As used in the present application the term "event" refers to an alarm, an incident, a happening or an occurrence that may have an immediate or a delayed consequence. For example may such an event be a computer server failure, a fire alarm, a burglary alarm, a power failure, equipment breakdown, an accident or a form of a municipal critical situation.

Therefore, is it a first aspect of the present invention to provide a system and a method of event monitoring and notification of the kind mentioned in the opening paragraph that is capable of choosing the most competent recipient for an event at any given time.

In a second aspect of the present invention is provided a system and a method of event monitoring and notification of the kind mentioned in the opening paragraph that incrementally notifies the subsequent best available recipients when the best available recipient is non-responsive to or declines a specific event, at any given time.

In a third aspect of the present invention is provided a system and method of event monitoring and notification of the kind mentioned in the opening paragraph which ensures that any event detected will be resolved and/or responded to at all times.

In a fourth aspect of the present invention is provided a system and method of event monitoring and notification of the kind mentioned in the opening paragraph which does not require human operators.

As used in the present application the term "telecommunication" refers to the transmission of information, as words, sounds, or images, usually over great distances, in the form of electromagnetic signals, as by telegraph, telephone, radio, television, or similar means.

As used in the present application the term "module" refers to a small functional component of a larger system, such as a subcomponent of computer software. Computer software is often made of a plurality of small individual components, which in assembled state give the computer software its functionality.

The novel and unique feature whereby this is achieved according to the present invention is the fact that the method comprises retrieving information on at least one primary recipient and any backup recipients from the computer database, matching the retrieved information on at least the primary recipient to the classification of the event, computing a match level that defines how competent at least the primary recipient is for handling the event, sorting the compiled array of recipients, into an array of at least one primary recipient having a match level that exceeds a predefined threshold or into an array in a rank order, based on the primary recipients match level, and arranging the associated backup recipients in a successive order following the at least one primary recipient.

By retrieving competence and work schedule information on the primary and/or backup recipients from a computer database, and matching the information to the event classification, it is ensured that the event notification is at least sent to one primary recipient which is best suited for handling the event. This means that if the event is for example classified as a network server failure, the at least one primary recipient is most likely a computer technician that has the relevant knowledge and experience to asses the correct response, and is geographically positioned such that the failure may be confined or resolved such that further damage is prevented.

In a preferred embodiment of the present invention, if the primary recipient does not respond to or declines the event notification, the event notification is sent to at least one backup recipient. If there is only one recipient, primary or backup, that is deemed suited for or available for a particular task, the one recipient is obliged to respond to the event.

This method may be implemented in a number of different situations, where event notification and response is necessary for keeping up safety, productivity, security, efficiency and/or proficiency. For example may this method be used for Public Safety and Emergency (PSE) systems such as police departments, Ambulance services, Fire Departments, civil defense, hospitals and/or municipalities using TETRA (Terrestrial Trunked Radio) communication network. The detailed definition of TETRA can be found in Digital Mobile Communications and the TETRA System, John Wiley & Sons, 1st edition, (ISBN 0471987921).

Further examples of the use may be for monitoring utility companies, buildings, sport event arrangements, concert arrangements and technical alarms for processing plants.

In a preferred embodiment of the present invention, the at least one remote unit may be a network server or a computer system which is at least arranged for monitoring events that arise on the server, workstations, network routers, switches and/or peripheral components connected to the server. This means that the central unit may be monitoring at least one remote unit, which in turn may be monitoring a number of peripheral sources. Thus, it is possible for an administrator of a remote unit to perform maintenance operations on peripheral sources and/or change the configuration of a remote unit without having to access the central unit. The central unit would therefore be kept on-line for monitoring other remote units although a single remote unit would be taken offline.

In alternative embodiments of the present invention, the at least one remote unit may be a peripheral source which is in direct connection to the central unit via a monitoring interface, which is designed for communicating with the central unit and the object being monitored.

In a preferred embodiment of the present invention, the central unit may be a network server that is arranged to be connected to the at least one remote unit via the Internet, a local network, a wireless connection and/or telecommunication systems. The use of at least one of the above mentioned connection means that the at least one remote unit being monitored may be geographically located close to the central unit or practically anywhere in the world. An organization that has its headquarters in one country could therefore monitor its local resources and the resources at any foreign branch office.

Any of the above mentioned connection means are of the kind where a permanent communication link between the central unit and the remote unit may be sustained.

When an event that requires response has been detected and an array of recipients has been compiled, a notification of the event is sent to at least one recipient. For this purpose the central unit is connected to at least a telecommunication central, an Internet based email server, a WAP server, a text message server and/or a TETRA server for dispatching at least one notification to at least one recipient. The notification may at least be in the form of a voice message, a text based message, a graphical message or any combination of these. The notification may at least be dispatched to a mobile and/or a stationary communication device, designated to the at least one recipient.

It may be important for an organization to have an opportunity to optimize the procedure for event response or to troubleshoot the response of event detection. For registering the sequence pursuing the event detection, the central unit may be connected to an event response module, which registers the dispatched notifications, monitors the status of the event, monitors the recipient response and/or registers the recipient response. The event response module logs all the processes that effect the central unit, which means that the system administrators may review the notification and response process. Furthermore, the logs may be used to automatically update the computer database containing the recipient information, such that if a recipient responds to an event notification the database has up to date information to that effect.

In a preferred embodiment of the present invention, the central unit may be connected to a status module, which logs the reception and the status of an event and notifies at least one client contact person of the received event and/or notifies the at least one client contact person of any status changes. The client contact person is usually a person who has overall responsibility of the system being monitored, such as a general foreman, a manager of a company or organization and/or a person appointed by a company or an organization. By notifying the client contact person and keeping the client contact person updated of the event status, it is ensured that the person responsible for the operation is made aware of that the event is being handled, without it being necessary for this person to respond to the event notification.

In an alternative embodiment of the present invention, the array of recipients may be compiled more dynamically. The array of recipients may be organized into at least one group, where the at least one group consist of recipients having a match level within a predefined range. As an example, if there are 15 recipients on duty when an event is detected, the recipient match level would be used to define what notification sequence is optimal for the response of the event. If a recipient has a match level which is for example in the range of 80 - 100 %, the recipient is placed in a group of primaries. If a recipient has a lower match level, he will be placed in a group of backup recipients that corresponds to the match level. Event notifications are sent simultaneously to all members of a single group, which means that it is not necessary to wait for the response of a single group member before notification is sent to the next, which may save valuable time if the event is critical. If no member of a group accepts the event notification within a predefined time period the event notification is sent to the members of the subsequent group.

In a preferred embodiment of the present invention, the match level of each recipient may at least partly be computed using a recipients qualification level, where the qualification level represents how well the recipients skills matches the event classification. When an event is detected at a remote unit, the received event information is used to identify the attributes of the event. These attributes define at least the nature of the event, the geographical location and/or the skills required to resolve the event. The attributes are matched to the available information on each recipient, creating a qualification level which defines how qualified each recipient is for handling the event. Some attributes are more important than others and a weight factor may be factored to each attribute for a specific event, such that one attribute may be deemed essential for one event while another attribute is deemed essential for another event. Therefore it may be very important for the response of one event that the recipient is geographically close, while the skills are less important, and vice versa.

The match level is not only based on qualification level of the recipient, as other factors may influence how well suited a recipient is for responding to an event. Therefore, the match level of each recipient may at least partly be computed using a recipients experience level, where the experience level represents how well the recipients previous experience matches the event classification. Each recipient is assigned an experience value for each skill, such that it is clear how much experience each recipient has in handling an event that requires a specific skill. The experience values may be weighed with the same weight factor as described previously, such that the importance of a specific experience value may vary according to the event information. This means that if you have two recipients that have equal skill levels, but the first one has more experience in responding to such an event than the second one, the first one would have a higher match level. The experience values for a recipient may be updated according to the recipients event response, where each accepted event notification increases the experience value while each declined event notification decreases the experience value for the qualifications concerning this event.

An important factor in the management of a business is keeping the stress of the personnel at a minimum. In order to account for the work load and the stress of each recipient, the match level of each recipient is at least partly computed using a recipients stress level, where the stress level represents how many events the recipient has responded to within a predefined preceding period and/or the recipients work load within a predefined preceding period. If a specific recipient has not accepted any alarms or has not had any overtime work the stress level will be low, while the recipient will have a high stress level if he has accepted many alarms and/or has had overtime work. As a result, if a recipient has a high qualification level and/or a high experience level, a high stress level will reduce the overall match level.

The present invention also relates to a computer-based system for event monitoring and notification where the system comprises at least one remote module and a central module, where the central module comprises means for continuously monitoring for events from the at least one remote module, means for identifying and classifying events received from the at least one remote module, a computer database containing information on possible recipients for receiving a notification of an event, means for retrieving information from the database, matching the at least one recipient to the classified event creating a recipients match level and compiling an array of at least one recipient for responding to a received event on the basis of the match level, means for dispatching the event information to at least one recipient, means for monitoring the recipient response to the event notification, means for logging the received event information, the classification of the event, the array of at least one recipient, the subsequent response to the event and updating the recipients experience value and stress level in the database, and means for allowing for the setup and/or the configuration of the event monitoring, the viewing of the event log and the notification of an event to at least one client contact person.

The computer-based system is designed such that it may easily be introduced to existing or new computer systems in that the remote and central modules may work together with existing computer management software such as Microsoft Operations Manager^{®}, IBM Directory^{®}, HP OpenView^{®}, SolarWinds Orion^{®} and/or IpMonitor^{®}. Furthermore, it should be obvious for those skilled in the art that the computer-based system can be adapted to similar types of software. The computer-based system may also be adapted to computer system where the remote module and the central module are stand-alone modules which collect information directly from the computer system.

The invention will be explained in greater details below with reference to the accompanying drawings, in which
Fig. 1 is a schematic diagram of a system for event monitoring and notification,
Fig. 2 is a flow diagram illustrating a preferred embodiment of the process of computing a recipients match level,
Fig. 3 is a flow diagram illustrating a preferred embodiment of the process for selecting the best matched recipients and the notification of at least one recipient,
Fig. 4 is a flow diagram illustrating a preferred embodiment of the process for selecting the best matched recipients and the notification of at least one recipient group.

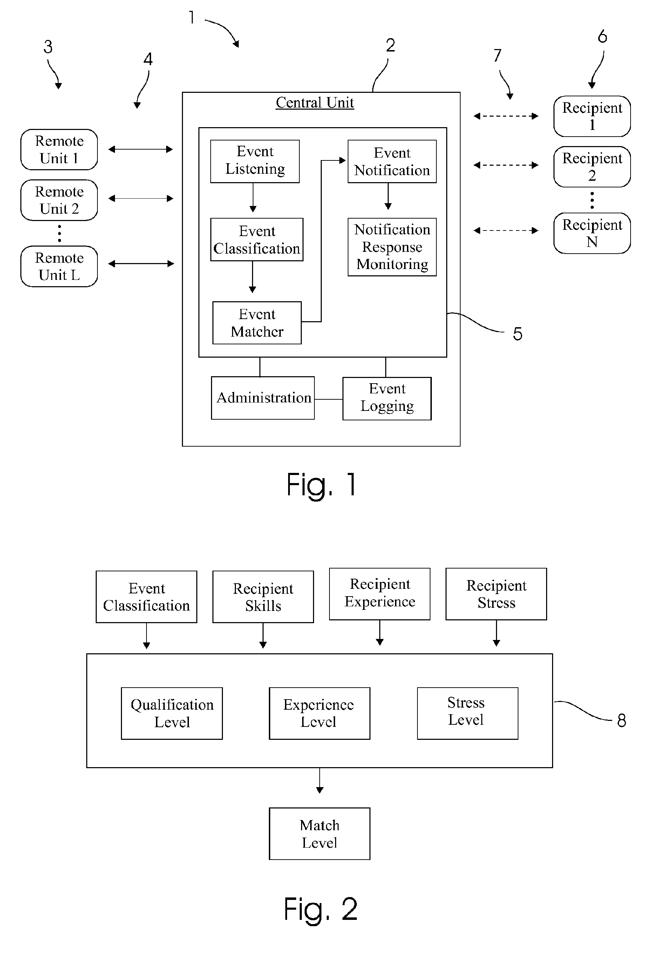

Fig. 1 is a schematic diagram of a system for event monitoring and notification 1, and shows the general principles of event monitoring and notification according to the present invention. The system comprises L remote units 3 and a central unit 2, where the central unit 2 is connected to the L remote units 3 via permanent connection means 4, which allows data to be transmitted from the remote units 3 to the central unit 2 and vice versa. The central unit 2 comprises a number of modules, which have their own specific functionalities. The event monitoring and notification is carried out in the modules marked by bounding box 5. An event listening module monitors the connections 4 between the central unit 2 and the remote units 3 and if the event listening module registers any abnormalities at a remote unit 3 the listening module forwards a communication thereof to the event classification module. The event classification module receives information about the abnormality or event from the event listening module and classifies the event according to the available information. If the event is classified as a minor event that does not require attention the classification module may be configured to ignore the event and not send any notification thereof.

If the event is classified as a major event that requires attention, the event classification module forwards the event information to the event matching module. The event matching module retrieves information on the available recipients from a database and compares the information to the event information, producing a match level which defines how competent a recipient is in responding to the event. The event matching module compiles an array of recipients, which defines the sequence in which the recipients will be notified of the event. A more detailed description on the match level is provided in the description of Fig. 2.

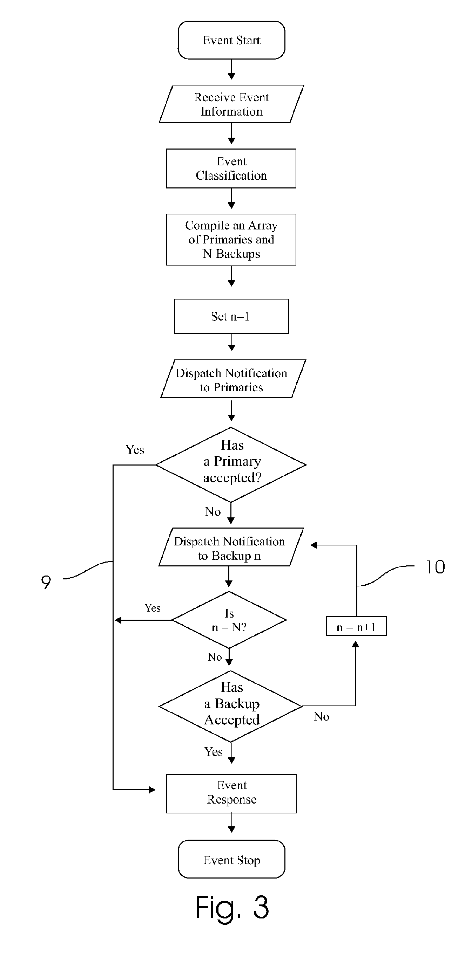

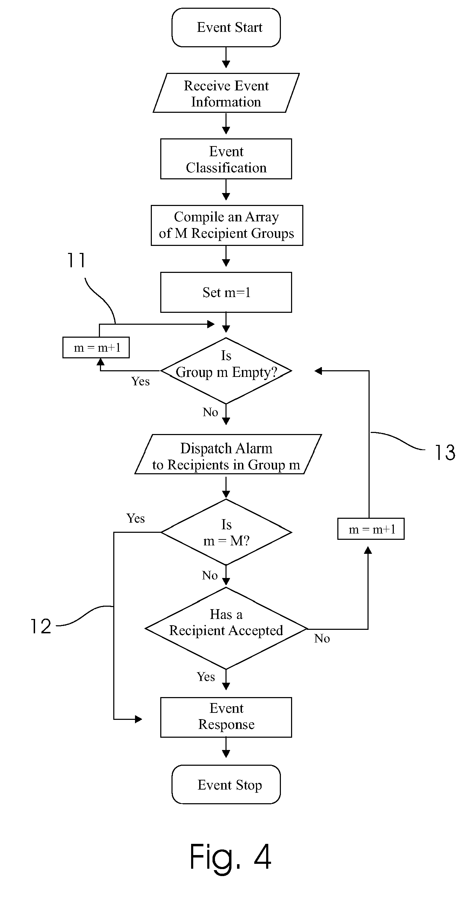

The array of recipients is accessed by the event notification module and notifications of the event is dispatched to the recipients 6 via communication means 7, according to the sequence defined in the array of recipients. The communication means may be of the kind as above mentioned. The event notification module furthermore monitors the delivery status of each sent notification. A more detailed description of the notification process is provided in the description to Fig. 3 and Fig. 4.

When a recipient 6 has accepted an event notification, the notification response monitoring module takes over the processing. The notification response monitoring module registers the status of the event, where the responding recipient 6 reports on any change in the status of the event via the communication means 7. The notification response module may include a client contact person as an additional recipient 7 for notifications of the event status such that the person having responsibility for at least one remote unit 3 is aware of the event.

The modules within the bounding box 5 are all connected to an event logging module and an administration module. The administration module allows a system administrator to set up and configure the event monitoring and notification system 1. The event logging module registers all actions taken by the central unit 2, the remote unit 3 and the recipients 6 during the occurrence of an event and furthermore registers all access to the administration module and the actions taken during that access.

Fig. 2 is a flow diagram showing the process of computing the match level for each recipient, in a preferred embodiment. For the purpose of computing the match level of one recipient, four input information factors are used, the event classification, information on the recipients skills, information on the recipients experience and information on the recipient stress level. Bounding box 8 represents the computational process, where three elements are separately computed, the qualification level, the experience level and the stress level, and subsequently used to compute the resulting output, which is the match level of the recipient. The resulting match level, which may be in the form of a percentage, defines how competent the recipient is for handling a specific event and the match level may be used to compile the array of recipients.

Fig. 3 is a flow diagram showing the process where an event has been detected that requires a response from a recipient, as described in connection with Fig. 1. The process starts where an event has been detected in a remote unit. The event information is received, which at least states the location of the event and the nature of the event. The event information is classified and if the event requires a response, as in this case, information on the available recipients is retrieved from the database.

The available recipients are divided into primary recipients and backup recipients, from hereon referred to as primaries and backups respectively. The primaries are those recipients which are on duty and ready for handling the event, while the backups may be recipients that are on call or backup duty. Each primary may have assigned at least one backup, where the at least one backup will receive a notification if the primary does not accept an event notification or is non-responsive.

The information on available recipients is used to calculate a match level for each primary. The primaries that have a match level that exceeds a predefined minimum or the at least one highest matched primary are placed in an array along with at least one backup recipients, where the number of backup recipients is set as N. The primaries receive a notification of the event, and if one of the primaries accepts the notification the process moves, along arrow 9, directly to the event response, where the primary handles the event and the notification process is stopped.

If none of the primaries has accepted the event notification within a predefined time period, an event notification is sent to the n^{th} backup of the primaries that were selected, in the first n=1 then a notification is sent to the next backup in line using n=n+1 loop 10. If none of the backups accepts the event notification the backup being notified is the last backup n=N then he is obliged to accept the event notification and respond to the event, thus stopping the notification process. If any of the backups accepts the notification and respond to the event the notification process is stopped.

Fig. 4 is a flow diagram showing a similar process as the one shown in Fig. 3, with the exception that the array of recipients is divided into at least one group. The number of groups M is predefined by a system administrator, where each group represents the recipients that have a match level within a predefined interval. For example if the predefined intervals are 20%, the groups would be at least five. Group 1, is the group that contains the recipients with the highest match level, while group 2 contains the recipients within the subsequent interval of recipients. The last group M contains the at least one backup recipient that has to accept the event notification. In alternative embodiments of the present invention, the predefined intervals for each group may be of different sizes. For example, group 1 is of recipients having a match level in the interval 80-100%, group 2 is in the interval 50-79% and the last group, group 3 is in the interval 0-49%.

After an event has been detected and an array of groups has been compiled, the counter m, is set to 1. Thereafter a control is made to see if group m=1 is empty. If the group is empty, the counter is incremented m=m+1 along loop 11, and the control is repeated for group m=2, and so on. If group m is not empty, an event notification is sent to the recipients in that group.

If group m is the last group, m=M, then at least one recipient within that group is obliged to respond to the event and the process is moved along arrow 12 to the event response and the event notification process is subsequently stopped. If group m is not the last group, and one of the recipients accept the event notification and responds to the event, the event is stopped. However, if none of the recipients within group m accepts the event notification, m is incremented, m=m+1 along loop 13 and a notification is sent to the next non-empty group, and the above mentioned process repeats itself, until a recipient accepts the event notification or the last group is reached.

The method and system for event monitoring and notification can within the scope of the invention, advantageously be used for compiling any form of arrays of recipients, where the match level is used for finding the best matched recipient out of all available recipients.

Also, the central unit may within the scope of the invention additionally monitor remote units via temporary connections, such as telecommunication connections, panic buttons, fire alarm buttons or similar methods such that abnormalities or events may be reported manually if the remote unit has not detected the event or abnormality.

The terms and expressions which have been employed in the foregoing specification are used as terms of description and not of limitation, and there is no intention, in the use of such terms and expressions, of excluding equivalents of the features shown and described or portions thereof, it being recognized that the scope of the invention is defined and limited only by the claims which follow.

## Claims

1. An automatic event monitoring and notification method which operates on a central unit (2) where the method comprises
- in a first step, receiving an electronic event information from at least one automatic or manual remote unit (3),
- in a second step, maintaining permanent communication (4) with the at least one remote unit (3),
- in a third step, classifying the received event based on the event information, generating an event classification,
- in a fourth step, providing a computer database of possible recipients (6), which stores at least up to date information about each recipients competence and their future and/or past work schedule,
- in a fifth step, compiling an array of recipients, from the computer database,
- in a sixth step, dispatching a notification of the event to at least one recipient (6)
- in a seventh step, awaiting a response from the at least one recipient (6),
- in a eight step, returning to the sixth step (10) if the at least one recipient (6) has rejected the notification or is non-responsive, and
- in a ninth step, responding to the event notification if the at least one recipient (6) has accepted the notification,
**characterized in that** the compiling of an array of recipients (6) in the fifth step comprises,
- retrieving information on at least one primary recipient (6) and any backup recipients (6) from the computer database,
- matching the retrieved information on at least the primary recipient (6) to the classification of the event, computing a match level that defines how competent at least the primary recipient (6) is for handling the event, and
- sorting the compiled array of recipients, into an array of at least one primary recipient (6) having a match level that exceeds a predefined threshold or into an array in a rank order, based on the primary recipients (6) match level.
- arranging the associated backup recipients (6) in a successive order following the at least one primary recipient (6).

2. An automatic event monitoring and notification method according to claim 1 **characterized in that**, the at least one remote unit (3) is a network server or a computer system which is at least arranged for monitoring events that arise on the server, workstations, network routers, switches and/or peripheral components connected to the server.

3. An automatic event monitoring and notification method according to claim 1 or 2 **characterized in that**, the central unit (2) is a network server that is arranged to be connected to the at least one remote unit via the Internet, a local network, a wireless connection and/or telecommunication systems.

4. An automatic event monitoring and notification method according to any of the preceding claims 1, 2 or 3 **characterized in that**, the central unit (2) is at least connected to a telecommunication central, an Internet based email server, a WAP server, a text message server and/or a TETRA server for dispatching at least one notification to at least one recipient.

5. An automatic event monitoring and notification method according to any of the preceding claims 1-4 **characterized in that**, the central unit is connected to an event response module, which registers the dispatched notifications, monitors the status of the event, monitors the recipient response and/or registers the recipient response.

6. An automatic event monitoring and notification method according to any of the preceding claims 1-5 **characterized in that**, the central unit (2) is connected to a status module, which logs the reception and the status of an event and notifies at least one client contact person of the received event and/or notifies the at least one client contact person of any status changes.

7. An automatic event monitoring and notification method according to any of the preceding claims 1-6 **characterized in that**, the array of recipients is organized into at least one group, where the at least one group consist of recipients (6) having a match level within a predefined range.

8. An automatic event monitoring and notification method according to any of the preceding claims 1-7 **characterized in that**, the match level of each recipient (6) is at least partly computed using a recipients (6) qualification level, where the qualification level represents how well the recipients (6) skills matches the event classification.

9. An automatic event monitoring and notification method according to any of the preceding claims 1-8 **characterized in that**, the match level of each recipient (6) is at least partly computed using a recipients (6) experience level, where the experience level represents how well the recipients (6) previous experience matches the event classification.

10. An automatic event monitoring and notification method according to any of the preceding claims 1-9 **characterized in that**, the match level of each recipient (6) is at least partly computed using a recipients stress level, where the stress level represents how many events the recipient (6) has responded to within a predefined preceding period and/or the recipients (6) work load within a predefined preceding period.

11. An automated computer-based system for event monitoring and notification where the system comprises
- at least one remote module (3), and
- a central module (2) comprising
- means for continuously monitoring for events from the at least one remote module (3),
- means for identifying and classifying events received from the at least one remote module (3),
- a computer database containing information on possible recipients (6) for receiving a notification of an event,
- means for retrieving information from the database, matching the at least one recipient (6) to the classified event creating a recipients (6) match level and compiling an array of at least one recipient (6) for responding to a received event on the basis of the match level,
- means for dispatching the event information (7) to at least one recipient (6),
- means for monitoring the recipient (6) response to the event notification,
- means for logging the received event information, the classification of the event, the array of at least one recipient, the subsequent response to the event and updating the recipients (6) experience value and stress level in the database, and
- means for allowing for the setup and/or the configuration of the event monitoring, the viewing of the event log and the notification of an event to at least one system administrator.
